# EUROPÄISCHE PATENTSCHRIFT

(11) **EP 3 287 312 B1**
(45) Veröffentlichungstag und Bekanntmachung des Hinweises auf die Patenterteilung: **13.01.2021**
(21) Anmeldenummer: 17187488.6
(22) Anmeldetag: 23.08.2017
(51) Int. Cl.: B60M 5/02, B61L 1/20, B61L 27/00, B60M 1/04

(54) **ABBAUEN EINER POTENTIALDIFFERENZ ZWISCHEN MASSEANSCHLÜSSEN / ERDUNGSSYSTEMEN EINES BAHNNETZES**
DISMANTLING OF POTENTIAL DIFFERENCE BETWEEN GROUND TERMINALS/GROUNDING SYSTEMS OF A RAILWAY SUPPLY NETWORK
RÉDUCTION D'UNE DIFFÉRENCE DE POTENTIEL ENTRE LES CONNECTIONS À LA MASSE / LES SYSTÈMES DE MISE À LA TERRE DANS UN RÉSEAU FERROVIAIRE

(30) Priorität: 23.08.2016 DE 102016215769
(43) Veröffentlichungstag der Anmeldung: 28.02.2018
(73) Patentinhaber: Witt IndustrieElektronik GmbH, 13405 Berlin (DE)
(72) Erfinder: KEESE, Thomas, 13467 Berlin (DE)
(74) Vertreter: Maikowski & Ninnemann Patentanwälte Partnerschaft mbB

(56) Entgegenhaltungen:
- WO-A1-01/06610
- DE-A1-102008 049 705

## Beschreibung

### TECHNISCHES GEBIET

Die vorliegende Erfindung betrifft eine Vorrichtung zum Abbauen einer Potentialdifferenz zwischen einem ersten Masseanschluss und einem zweiten Massenanschluss eines Bahnnetzes, sowie ein entsprechendes Verfahren. Die Erfindung betrifft zudem ein Verfahren zum Orten eines Kurzschlusses in einem Bahnschienenabschnitt.

### HINTERGRUND

In Bahnnetzen für elektrisch betriebene Schienenfahrzeuge, wie bspw. Gleichstrombahnen, wird die Fahrschiene als Rückleiter für den Strom verwendet. Dabei ist die Fahrschiene auf einem Bauwerk installiert und üblicherweise davon isoliert. Das Bauwerk führt ein Erdpotential. Da die Fahrschiene einen endlichen ohmschen Widerstand aufweist, der beispielsweise 20mΩ/km betragen kann, kann es je nach Höhe des Stroms in der Fahrschiene zu Potentialdifferenzen zwischen der Fahrschiene und dem Bauwerk kommen. Auch andere Gründe können dazu führen, dass Potentialdifferenzen zwischen der Fahrschiene und dem Bauwerk entstehen.

Es kann vorgegeben sein, dass die Potentialdifferenz zwischen der Fahrscheine und dem Bauwerk einen bestimmten Maximalwert nicht überschreiten darf und somit ab Überschreiten eines Schwellenwerts abgebaut werden muss.

Zum Abbauen der Potentialdifferenz zwischen der Fahrscheine und dem Bauwerk ist es bekannt, die Fahrschiene mit dem Bauwerk kurzzeitig kurzzuschließen, wobei hierfür mechanische Schalter, wie ein Relais oder ein Schütz, oder Sicherungen eingesetzt werden können. Bei Überschreiten des besagten Schwellenwerts wird der Schalter eingeschaltet, wodurch Fahrschiene und Bauwerk kurzzeitig kurzgeschlossen werden und die Spannung schnell abgebaut wird. Nach Abbau der Spannung, also der Potentialdifferenz, wird der Kurzschluss wieder aufgehoben, um die elektrische Isolierung zwischen Bauwerk und Schiene sicherzustellen.

Eine solche Vorgehensweise wird beispielsweise in dem Dokument DE 10 2008 049 705 A1 beschrieben.

### BESCHREIBUNG

Die Erfindung ist durch die Merkmale der unabhängigen Ansprüche definiert.

Gemäß dem unabhängigen Anspruch 1 wird eine Vorrichtung zum Abbauen einer Potentialdifferenz zwischen einem ersten Masseanschluss und einem zweiten Masseanschluss vorgeschlagen. Dabei wird der erste Masseanschluss ausgebildet von einer Schiene für ein Schienenfahrzeug, und der zweite Masseanschluss wird ausgebildet von einem Bauwerk, an dem die Schiene installiert ist. Die Vorrichtung umfasst einen Strompfad zum Führen eines Stroms zwischen dem ersten Masseanschluss und dem zweiten Masseanschluss; ein im Strompfad installiertes steuerbares Schaltmodul; eine Messeinrichtung, die ausgebildet ist zum Messen wenigstens einer Messgröße, die indikativ für den Strom im Strompfad und/oder für die Potentialdifferenz zwischen den Masseanschlüssen ist, und zum Bereitstellen eines Messergebnisses; eine Steuereinrichtung, die ausgebildet ist, in Abhängigkeit von dem Messergebnis ein Steuersignal zu erzeugen und dem Schaltmodul zuzuführen, wobei die Steuereinrichtung weiter ausgebildet ist, durch den Betrieb des Schaltmoduls den Strom im Strompfad amplitudenmäßig zu begrenzen.

Gemäß dem unabhängigen Anspruch 15 wird ein Verfahren zum Betreiben einer Vorrichtung zum Abbauen einer Potentialdifferenz zwischen einem ersten Masseanschluss und einem zweiten Masseanschluss vorgeschlagen. Dabei wird der erste Masseanschluss ausgebildet von einer Schiene für ein Schienenfahrzeug, und der zweite Masseanschluss wird ausgebildet von einem Bauwerk, an dem die Schiene installiert ist. Die Vorrichtung umfasst einen Strompfad zum Führen eines Stroms zwischen dem ersten Masseanschluss und dem zweiten Masseanschluss sowie ein im Strompfad installiertes steuerbares Schaltmodul. Das Verfahren umfasst die Schritte: Messen wenigstens einer Messgröße, die indikativ für den Strom im Strompfad und/oder für die Potentialdifferenz zwischen den Masseanschlüssen ist, und Bereitstellen eines Messergebnisses; Erzeugen eines Steuersignals in Abhängigkeit von dem Messergebnis und Zuführen des Steuersignals zum Schaltmodul; und amplitudenmäßiges Begrenzen des Stroms im Strompfad durch den Betrieb des Schaltmoduls.

Gemäß dem unabhängigen Anspruch 16 wird vorgeschlagen ein Verfahren zum Orten eines elektrischen Kurzschlusses in einem Bahnschienenabschnitt, an welchem wenigstens zwei wie vorstehend beschrieben ausgebildete Vorrichtungen angeordnet sind. Das Verfahren umfasst: Aufzeichnen der von den Messeinrichtungen der Vorrichtungen gemessenen Messgrößen und/oder von Betriebsgrößen, die indikativ für den Betrieb der Schaltmodule der Vorrichtungen sind; Auswerten der aufgezeichneten Messgrößen und/oder Betriebsgrößen; und Bereitstellen eines Auswertungsergebnisses, das indikativ für den Ort des elektrischen Kurzschlusses ist.

Die abhängigen Ansprüche definieren bevorzugte Ausführungsformen der Erfindung. Weitere Merkmale und Vorteile werden dem Fachmann in Anbetracht des Studiums der nachfolgenden detaillierten Beschreibung sowie des Sichtens der begleitenden Zeichnungen deutlich.

### KURZE BESCHREIBUNG DER ZEICHNUNGEN

Die in den Figuren gezeigten Teile sind nicht notwendigerweise maßstabsgetreu; vielmehr liegt die Betonung in dem Darstellen von Prinzipien der Erfindung. Ferner bezeichnen in den Figuren gleich Bezugszeichen einander entsprechende Teile. In den Figuren zeigen:
- Fig. 1: schematisch und exemplarisch einen Ausschnitt eines vertikalen Querschnitts von Komponenten einen Bahnnetzes gemäß einer oder mehreren Ausführungsformen;
- Fig. 2: schematisch und exemplarisch ein Schaltbild einer Vorrichtung zum Abbauen einer Potentialdifferenz gemäß einer oder mehreren Ausführungsformen;
- Fig. 3A-C: jeweils schematisch und exemplarisch ein Schaltbild eines Schaltmoduls gemäß einer oder mehreren Ausführungsformen
- Fig. 4: schematisch und exemplarisch ein Blockschaltbild einer Steuereinrichtung gemäß einer oder mehreren Ausführungsformen;
- Fig. 5: schematisch und exemplarisch ein Blockschaltbild einer Vorrichtung zum Abbauen einer Potentialdifferenz gemäß einer oder mehreren Ausführungsformen; und
- Fig. 6: schematisch und exemplarisch ein Bahnschienenabschnitt, an dem wenigstens zwei Vorrichtung zum Abbauen einer Potentialdifferenz angeordnet sind, gemäß einer oder mehreren Ausführungsformen.

### DETAILLIERTE BESCHREIBUNG

In der folgenden detaillierten Beschreibung wird auf die begleitenden Zeichnungen Bezug genommen, die dazugehören und in denen durch die Veranschaulichung spezifischer Ausführungsformen gezeigt wird, wie die Erfindung in die Praxis umgesetzt werden kann.

In diesem Zusammenhang kann richtungsangebende Terminologie, wie beispielsweise "ober-", "unter-", "rück-", "vorder-", "hinter-", "nachgelagert", "vorgelagert" etc., mit Bezug auf die Ausrichtung der Figuren, die beschrieben werden, verwendet werden. Da Teile von Ausführungsformen in einer Reihe von unterschiedlichen Ausrichtungen positioniert sein können, kann die richtungsangebende Terminologie zu Zwecken der Veranschaulichung verwendet werden und ist keinesfalls einschränkend. Es wird darauf hingewiesen, dass andere Ausführungsformen angewandt werden können und strukturelle oder logische Veränderungen ausgeführt werden können, ohne vom Schutzumfang der vorliegenden Erfindung abzuweichen. Die folgende detaillierte Beschreibung ist daher nicht in einem einschränkenden Sinn zu verstehen, und der Schutzumfang der vorliegenden Erfindung ist durch die angefügten Ansprüche definiert.

Bezug wird nunmehr im Detail auf verschiedene Ausführungsformen, auf ein oder mehrere Beispiele, die in den Figuren veranschaulicht sind, genommen. Jedes Beispiel wird in erläuternder Art und Weise präsentiert und ist nicht als eine Einschränkung der Erfindung zu deuten. Beispielsweise können veranschaulichte oder als Teil einer Ausführungsform beschriebene Merkmale auf oder im Zusammenhang mit anderen Ausführungsformen angewandt werden, um noch eine weitere Ausführungsform hervorzubringen. Dass die vorliegende Erfindung derartige Modifizierungen und Variationen umfasst, ist beabsichtigt. Die Beispiele werden unter Anwendung einer spezifischen Sprache beschrieben, die nicht als den Schutzumfang der angefügten Ansprüche einschränkend ausgelegt werden sollte. Die Zeichnungen sind keine maßstabgetreue Wiedergabe und dienen lediglich der Veranschaulichung. Zum besseren Verständnis sind, wenn nicht anders angegeben, dieselben Elemente durch dieselben Referenzen in den verschiedenen Zeichnungen gekennzeichnet worden.

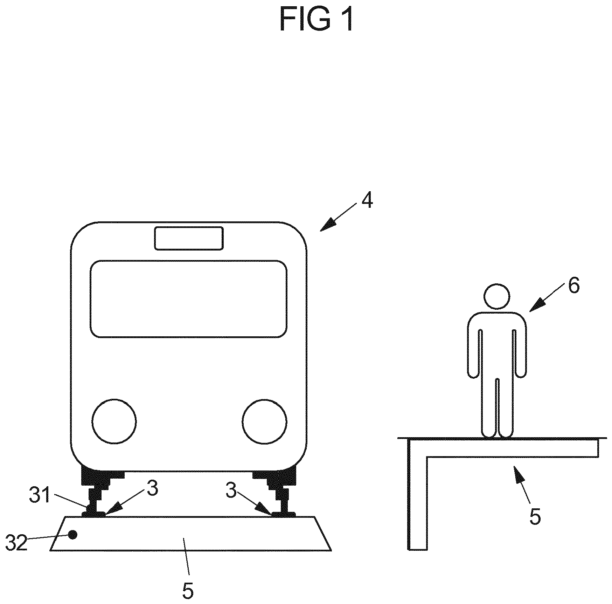

Fig. 1 zeigt schematisch und exemplarisch einen Ausschnitt eines vertikalen Querschnitts von Komponenten einen Bahnnetzes gemäß einer oder mehreren Ausführungsformen.

In dem Bahnnetzen für elektrisch betriebene Schienenfahrzeuge 4, wie bspw. Gleichstrombahnen, wird eine Fahrschiene 3 beispielsweise auch als Rückleiter für den Strom verwendet. Die Fahrschiene 3 kann einen ersten Masseanschluss 31 ausbilden. Dabei ist die Fahrschiene 3 auf einem Bauwerk 5 installiert und üblicherweise davon isoliert angeordnet. Das Bauwerk 5 umfasst bspw. einen Unterbau, der eine feste Vorlage für die Konstruktion eines Oberbaus bietet, welches ein Gleisbett und die darauf montierte Fahrschiene 3 (Gleise) umfassen kann. Das Gleisbett kann ebenfalls Teil des Bauwerks 5 sein.

Das Bauwerk 5 führt ein Erdpotential und kann einen zweiten Masseanschluss 32 ausbilden. Auf demselben elektrischen Potential wie das Gleisbett kann sich auch ein in der Fig. 1 schematisch dargestellter Bahnsteig befinden, über welchen Personen 6 in das Schienenfahrzeug 4 einsteigen können.

Die beiden Masseanschlüsse 31 und 32 gehören also beispielsweise zum selben Erdungssystem oder zu unterschiedlichen Erdungssystemen. Gleichzeitig können diese beiden Masseanschlüsse 31 und 32 isoliert voneinander angeordnet sein.

Da die Fahrschiene 3 einen endlichen ohmschen Widerstand aufweist, der beispielsweise etwa 20 mΩ/km betragen kann, kann es je nach Höhe des Stroms in der Fahrschiene 3 zu Potentialdifferenzen zwischen der Fahrschiene 3 und dem Bauwerk 5 kommen. Auch andere Gründe können dazu führen, dass Potentialdifferenzen zwischen der Fahrschiene 3 und dem Bauwerk 5 entstehen, also zwischen den beiden Masseanschlüssen 31 und 32.

Es kann vorgegeben sein, dass die Potentialdifferenz zwischen der Fahrscheine 3 und dem Bauwerk 5 einen bestimmten Maximalwert nicht überschreiten darf und somit ab Überschreiten eines Schwellenwerts abgebaut werden muss.

Zum Abbauen einer derartigen Potentialdifferenz wird eine Vorrichtung vorgeschlagen, von der eine Ausführungsform schematisch und exemplarisch in Fig. 1 dargestellt ist, auf die im Folgenden verwiesen wird.

Die Vorrichtung 1 umfasst einen Strompfad 11 zum Führen eines Stroms zwischen dem ersten Masseanschluss 31 und dem zweiten Masseanschluss 32; ein im Strompfad 11 installiertes steuerbares Schaltmodul 12; eine Messeinrichtung 13, die ausgebildet ist zum Messen wenigstens einer Messgröße, die indikativ für den Strom im Strompfad 11 und/oder für die Potentialdifferenz zwischen den Masseanschlüssen 31, 32 ist, und zum Bereitstellen eines Messergebnisses 131; eine Steuereinrichtung 14, die ausgebildet ist, in Abhängigkeit von dem Messergebnis 131 ein Steuersignal 141 zu erzeugen und dem Schaltmodul 12 zuzuführen, wobei die Steuereinrichtung 14 weiter ausgebildet ist, durch den Betrieb des Schaltmoduls 12 den Strom im Strompfad 11 amplitudenmäßig zu begrenzen.

Ebenfalls wird vorgeschlagen ein Verfahren zum Betreiben einer Vorrichtung zum Abbauen einer derartigen Potentialdifferenz. Nach einer Ausführungsform umfasst das Verfahren ein Messen wenigstens einer Messgröße, die indikativ für den Strom im Strompfad 11 und/oder für die Potentialdifferenz zwischen den Masseanschlüssen 31, 32 ist, und Bereitstellen eines Messergebnisses 131; ein Erzeugen eines Steuersignals 141 in Abhängigkeit von dem Messergebnis 131 und ein Zuführen des Steuersignals 141 zum Schaltmodul 12; und ein amplitudenmäßiges Begrenzen des Stroms im Strompfad 11 durch den Betrieb des Schaltmoduls 12.

Beispielsweise ist die Vorrichtung 1 ausgebildet, eine Potenzialdifferenz zwischen Masseanschlüssen eines Bahnsystems abzubauen sowie den den Abbau bewirkenden Ausgleichsstrom amplitudenmäßig zu begrenzen, insbesondere zu regeln.

Die oben beschriebenen Ausführungsformen beinhalten die Erkenntnis, dass ein bloßes Kurzschließen der beiden Masseanschlüsse 31 und 32, wie es aus dem Stand der Technik bekannt ist, zu sehr hohen Strömen im Strompfad führen kann, welche beispielsweise Korrosionen und/oder andere Schäden im Strompfad oder in der Nähe von den Masseanschlüssen verursachen können. Anstelle die beiden Masseanschlüsse 31 und 32 einfach kurzzuschließen, wird gemäß einer oder mehreren Ausführungsformen vorgeschlagen, den Strom im Strompfad 11, der den Abbau der Potenzialdifferenz zwischen den beiden Masseanschlüsse 31 und 32 bewirkt, also den Strom zwischen der Schiene 3, die als Rückleiter fungiert, und dem Bauwerk 5, amplitudenmäßig zu begrenzen, beispielsweise durch einen geregelten Betrieb des Schaltmoduls 12. Insbesondere kann die amplitudenmäßige Begrenzung des Stromes während des Stromflusses im Strompfad 11 erfolgen. Auf diese Weise können zu hohe Ströme vermieden werden. Nach einer Ausführungsform werden die beiden Masseanschlüsse 31 und 32 also nicht bzw. nicht nur mechanisch kurzgeschlossen, sondern der Abbau der Potenzialdifferenz zwischen den beiden Masseanschlüssen 31 und 32 und/oder der Strom im Strompfad 11 wird aktiv geregelt.

Nachfolgend werden anhand der Zeichnungen weitere optionale Merkmale der Vorrichtung 1 und des Verfahrens zum Betreiben der Vorrichtung 1 erläutert:

Das Schaltmodul 12 kann ausgebildet sein, auf den Empfang des Steuersignals 141 hin ein- oder ausgeschaltet zu werden. Insbesondere kann das Schaltmodul 12 ausgebildet sein, auch während des Führens eines Stroms ausgeschaltet zu werden.

Im eingeschalteten Zustand führt das Schaltmodul 12 den Strom im Strompfad 11 wenigstens teilweise und das Schaltmodul 12 weist dann einen vergleichsweise niedrigen, beispielsweise einen vernachlässigbaren Widerstand auf. Im ausgeschalteten Zustand führt das Schaltmodul 12 keinen Strom, sondern sperrt wenigstens eine an seinen Anschlüssen anliegende Vorwärtsspannung. Das Schaltmodul 12 kann auch ausgebildet sein, im ausgeschalteten Zustand eine an seinen Anschlüssen anliegende Spannung in beide Stromflussrichtungen zu sperren. Ebenfalls kann das Schaltmodul 12 ausgebildet sein, einen Strom in beide Stromflussrichtungen zu führen, also sowohl vom zweiten Masseanschluss 32 hin zum ersten Masseanschluss 31 als auch vom ersten Masseanschluss 31 hin zum zweiten Masseanschluss 32. Auf diese optionalen Aspekte wird an späterer Stelle näher eingegangen werden.

Parallel zu dem Schaltmodul 12 kann ein passives Strombegrenzungsmittel 111 geschaltet sein, beispielsweise eine Spule, die beispielsweise eine Induktivität im Bereich von einigen 100 mH aufweist. Auch ein anderes passives Strombegrenzungsmittel 111 kann zusätzlich oder alternativ vorgesehen sein, beispielsweise ein ohmscher Widerstand, beispielsweise ein temperaturabhängiger Widerstand, wie ein PTC (Positive Temperature Coefficient) Widerstand. Das passive Strombegrenzungsmittel 111 kann damit einen Teil des Strompfades 11 ausbilden und der Strom kann bei Schaltvorgängen des Schaltmoduls 12 auf das passive Strombegrenzungsmittel 111 kommutieren. Wird das Schaltmodul 12 beispielsweise kurzzeitig ausgeschaltet, um den Strom im Strompfad 11 amplitudenmäßig zu begrenzen, so kommutiert der Strom vom Schaltmodul 12 auf das passive Strombegrenzungsmittel 111.

Beispielsweise weist das Schaltmodul 12 kurze Schaltzeiten auf, beispielsweise eine Einschaltzeit kleiner als 0,1 ms und eine Ausschaltzeit kleiner als 0,1 ms.

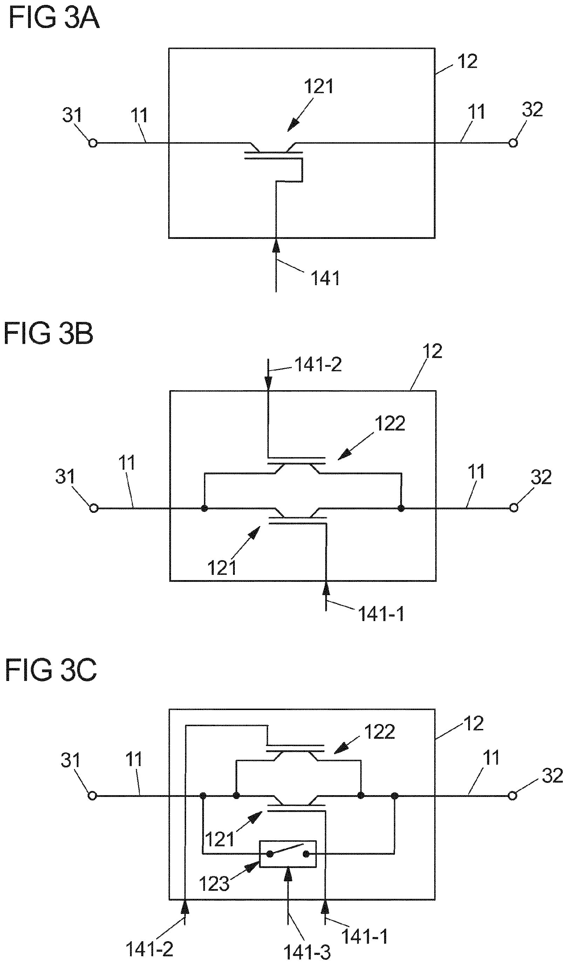

Beispielsweise umfasst das Schaltmodul 12 wenigstens ein schaltbares Leistungshalbleiterbauelement 121. Ein derartiges Leistungshalbleiterbauelement 121 ist schematisch und exemplarisch in der Fig. 3A dargestellt. Das Leistungshalbleiterbauelement 121 kann beispielsweise eine Thyristor Struktur, insbesondere einer GTO (Gate Turn-Off) Thyristor Struktur, oder eine IGBT Struktur, oder eine MOSFET Struktur aufweisen. Das Leistungshalbleiterbauelement 121 ist jedoch nicht auf eine bestimmte Struktur beschränkt. Nach einer Ausführungsform kann das Leistungshalbleiterbauelement 121 ein- und ausgeschaltet werden. Im eingeschalteten Zustand weist das Leistungshalbleiterbauelement 121 beispielsweise einen niedrigen Widerstand auf bzw. eine niedrige Vorwärtsspannung, und im ausgeschalteten Zustand ist das Leistungshalbleiterbauelement 121 beispielsweise ausgebildet, eine zwischen seinen Lastanschlüssen anliegende Spannung zu sperren. Das Leistungshalbleiterbauelement 121 kann einen Steueranschluss, beispielsweise einen Gate-Anschluss, aufweisen, dem das Steuersignal 141 der Steuereinrichtung 14 zugeführt ist.

Das Schaltmodul 12 kann auch wenigstens zwei antiparallel zueinander verschaltete Leistungshalbleiterbauelemente 121, 122 umfassen, wie es schematisch und exemplarisch in der Fig. 3B dargestellt ist. Dabei kann die Steuereinrichtung 14 weiter ausgebildet sein, durch den Betrieb der wenigstens zwei antiparallel zueinander verschalteten Leistungshalbleiterbauelemente 121, 122 den Strom im Strompfad 11 in beiden Stromflussrichtungen amplitudenmäßig zu begrenzen. Das zu dem Leistungshalbleiterbauelement 121 oben ausgeführte kann gleichermaßen für das Leistungshalbleiterbauelement 122 gelten. Die beiden Leistungshalbleiterbauelemente 121 und 122 können monolithisch integriert sein oder aber durch zwei diskrete Leistungshalbleitermodule gebildet sein. Beispielsweise empfangen beide Leistungshalbleiterbauelemente 121, 122 dasselbe Steuersignal 141 von der Steuereinrichtung 14, oder die Steuereinrichtung 14 stellt das Steuersignal 141 als ein erstes Steuersignal 141-1 und als ein zweites Steuersignal 141-2 bereit, sodass die beiden Leistungshalbleiterbauelemente 121, 122 auch unabhängig voneinander gesteuert werden können. Bei dieser Ausführungsform kann die Potenzialdifferenz zwischen den beiden Masseanschlüssen 31 und 32 also unabhängig von ihrer Polarität abgebaut werden, was insbesondere für AC-Bahnnetze von Vorteil sein kann.

An dieser Stelle wird darauf hingewiesen, dass die hier verwendete Formulierung "Abbauen der Potenzialdifferenz" nicht notwendigerweise meint, dass die Vorrichtung 1 die Potenzialdifferenz zwischen den beiden Masseanschluss 31 und 32 auf etwa Null reduziert. Es kann auch ausreichend sein, dass die Potenzialdifferenz auf einem bestimmten unteren Schwellenwert reduziert wird, der beispielsweise bei etwa 30 V liegen kann.

Das Schaltmodul 12 kann weiter ein Relais 123 umfassen, wie es schematisch in der Fig. 3C dargestellt ist, wobei die Steuereinrichtung 14 weiter ausgebildet sein kann, dem Relais 123 das Steuersignal 141 zuzuführen. Das Relais 123 weist beispielsweise prellfreie Kontakte auf. Die hier verwendete Bezeichnung "Relais" kann jedes Schaltelement meinen, welches durch Ausbilden bzw. Aufheben eines mechanischen Kontaktes geschaltet werden kann, also beispielsweise auch einen Schütz, einen Schützkontakt und Ähnliches. Beispielsweise erzeugt die Steuereinrichtung 14 in Abhängigkeit von dem Messergebnis 131 ein drittes Steuersignal 141-3 als Teil des Steuersignals 141 und führt dieses dritte Steuersignal 141-3 dem Relais 123 zu. Auf diese Weise kann das Relais 123 unabhängig von dem bzw. den Leistungshalbleiterbauelement(en) 121 (122) gesteuert werden. Wenn der die Potentialdifferenz abbauende Strom im Strompfad 11 bspw. über einen langen Zeitraum hinweg anhaltend hoch ist und das bzw. die Halbleiterbauelemente 121/122 droht/drohen, thermisch überlastet zu werden, kann/können die Halbleiterbauelemente 121/122 von dem Relais 123 parallel zum Halbleiterleiterbauelement 121/122 durch Überbrückung (d.h. der Schützkontakt übernimmt den Strom) geschützt, also entlastet werden.

Nach einer Ausführungsform ist die Steuereinrichtung 14 demnach ausgebildet, das Relais 123 einzuschalten, wenn der Strom im Strompfad einen vorgegebenen Schwellenwert überschreitet und/oder wenn der Strom im Strompfad einen vorgegebenen Schwellenwert andauernd über eine vorgegebene Zeitdauer hinweg überschreitet. Alternativ oder zusätzlich kann die Steuereinrichtung 14 ausgebildet sein, das Relais 123 standardmäßig gleichzeitig oder kurz nach dem Einschalten des Leistungshalbleiterbauelements 121 bzw. 122 einzuschalten, beispielsweise einige µs nach dem Einschalten des Leistungshalbleiterbauelements 121 bzw. 122. Nach einer besonderen Ausführungsform kann dies dadurch sichergestellt werden, dass wenigstens eines der Leistungshalbleiterbauelemente 121 und 122 ein und dasselbe Steuersignal 141 zugeführt wird. Da das Leistungshalbleiterbauelement 121 bzw. 122 eine kürzere Einschaltzeit aufweisen kann als das Relais 123, wird zunächst das Leistungshalbleiterbauelement 121 bzw. 122 stromführend und sodann - je nach Einschaltzeit des Relais 123 etwas zeitversetzt - durch den zusätzlichen Pfad im Relais unterstützt; d.h., nach Einschalten des Relais 123 kann sowohl das Leistungshalbleiterbauelement 121 bzw. 122 als auch das Relais 123 stromführend sein.

Die Messeinrichtung 13 kann insbesondere ausgebildet sein, den Strom im Strompfad 11 während des Abbauens der Potentialdifferenz zwischen den Masseanschlüssen 31 und 32 als Messgröße zu messen. Für diese Zwecke kann die Messeinrichtung 13 einen geeigneten Stromsensor aufweisen, um den Strom zu messen, beispielsweise einen Shunt oder eine Rogowski-Spule oder einen LEM-Wandler oder Ähnliches. Die Messeinrichtung 13 kann ausgebildet sein, das Messergebnis 131 als ein digitales Signal bereitzustellen. Die Messeinrichtung 13 kann alternativ oder zusätzlich ausgebildet sein, als Messgröße die Potenzialdifferenz zwischen den Masseanschlüssen 31 und 32 zu messen und ebenfalls als Teil des Messergebnisses 131 bereitzustellen.

Die Messeinrichtung 13 kann auch ausgebildet sein, AC Größen und DC Größen separat voneinander zu erfassen und entsprechende separate Messergebnisse bereitzustellen. Diese separate Messergebnisse können einer Auswertung in der Steuereinrichtung 14 unterzogen werden.

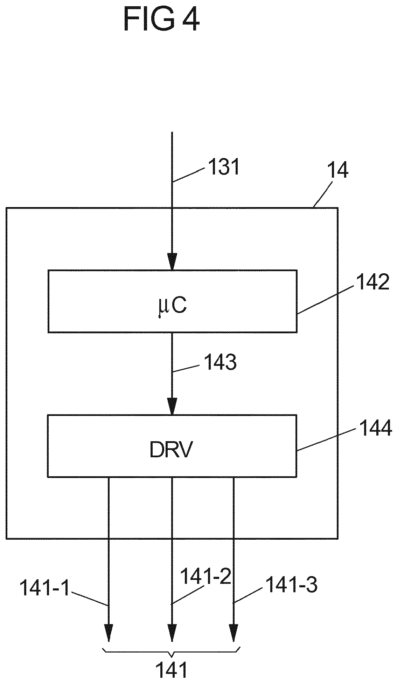

Nach einer Ausführungsform umfasst die Steuereinrichtung 14 eine Signalverarbeitungseinheit 142, wie sie schematisch und exemplarisch in der Fig. 4 dargestellt ist. Die Signalverarbeitungseinheit 142 kann ausgebildet sein, das Messergebnis 131 auszuwerten und in Abhängigkeit von der Auswertung ein Zwischensignal 143 bereitzustellen. Die Signalverarbeitungseinheit 142 kann insbesondere digitale Signalverarbeitungsmittel umfassen. Beispielsweise ist die Signalverarbeitungseinheit 142 als ein Mikroprozessor (µC) ausgestaltet, um digitale Rechenoperationen, beispielsweise Vergleichsoperationen, durchzuführen. Auch andere digitale Signalverarbeitungsmittel können vorgesehen sein, beispielsweise ein FPGA oder ein ASIC.

Die Steuereinrichtung 14 kann weiter einen Treiber 144 (DRV) umfassen, der ausgebildet ist, das Zwischensignal 143 in das Steuersignal 141 zu transformieren und dem Schaltmodul 12 zuzuführen. Entsprechend den vorherigen Ausführungen kann der Treiber 144 auch ausgebildet sein, dem beispielsweise vorgesehenen ersten Leistungshalbleiterbauelement 121, dem beispielsweise vorgesehenen zweiten Leistungshalbleiterbauelement 122 und dem beispielsweise vorgesehenen Relais 123 separat voneinander besagtes erstes Steuersignal 141-1, zweites Steuersignal 141-2 und besagtes drittes Steuersignal 141-3 zuzuführen. Für diese Zwecke kann der Treiber 144 mehrere Treibermodule (nicht dargestellt) umfassen, die das Zwischensignal 143 entsprechend transformieren. Auch das Zwischensignal 143 kann von der Signalverarbeitungseinheit 142 folglich als erstes Zwischensignal für das beispielsweise vorgesehene erste Leistungshalbleiterbauelement 121, als zweites Zwischensignal für das beispielsweise vorgesehene erste Leistungshalbleiterbauelement und als drittes Zwischensignal für das beispielsweise vorgesehene Relais 123 bereitgestellt werden. Auf diese Weise können die drei Komponenten 121, 122 und 123 individuell und in Abhängigkeit von dem Messergebnis 131 betrieben werden.

Die oben vorgestellte beispielhafte strukturelle Ausbildung der Vorrichtung 1 kann es gestatten, dass die Steuereinrichtung 14 in Abhängigkeit von dem Messergebnis 131 den Strom im Strompfad 11 regeln kann, insbesondere amplitudenmäßig beschränken kann. Nach einer Ausführungsform bilden also das Schaltmodul 12, die Messeinrichtung 13 und die Steuereinrichtung 14 in ihrer Gemeinsamkeit einen Stromregler aus. Darüber hinaus kann die Steuereinrichtung 14 ausgebildet sein, einen oder mehrere Schwellenwerte, die indikativ für eine maximal zulässige Potentialdifferenz zwischen den beiden Masseanschlüssen 31, 32 und/oder indikativ für einen maximal zulässigen Strom im Strompfad 11 sind, zu speichern. Beispielsweise umfassen die digitalen Signalverarbeitungsmittel der Signalverarbeitungseinheit 142 hierfür einen entsprechend ausgestalteten Speicher. Die Steuereinrichtung 14 kann weiter ausgebildet sein, den Strom im Strompfad 11 in Abhängigkeit von dem Messergebnis 131 und basierend auf den einen oder auf den mehreren Schwellenwerten zu regeln.

Die Schwellenwerte umfassen beispielsweise einen ersten Schwellenwert, der die maximal zulässige Potenzialdifferenz zwischen den beiden Masseanschlüssen 31 und 32 angibt, die beispielsweise bei betragsmäßig 40 V liegen kann. Die Schwellenwerte können alternativ oder zusätzlich beispielsweise einen zweiten Schwellenwert umfassen, der den maximal zulässigen Strom im Strompfad 11 angibt, der beispielsweise bei betragsmäßig 20 A liegen kann. Nach einer Ausführungsform sind diese Schwellenwerte programmierbar und können je nach Anforderung des Bahnnetzbetreibers wertmäßig belegt werden. Insbesondere können unterschiedliche Schwellenwerte hinterlegt sein, je nachdem, ob es sich bei dem Bahnnetz um ein Gleichstromnetz oder ein Wechselstromnetz handelt. Eine erste Gruppe von Schwellenwerten kann also AC Schwellenwerte darstellen, und eine zweite Gruppe von Schwellenwerten kann DC Schwellenwerte darstellen.

Die Steuereinrichtung 14 kann insbesondere ausgebildet sein, den Strom im Strompfad auf eine maximale Amplitude von 800 A zu begrenzen. Der Strompfad 11 kann bei eingeschaltetem Schaltmodul 12 eine Impedanz von Z < 0,1 Ω aufweisen. Beispielsweise wird diese Impedanz insbesondere durch das optional vorgesehene passive Strombegrenzungsmittel 111 ausgebildet.

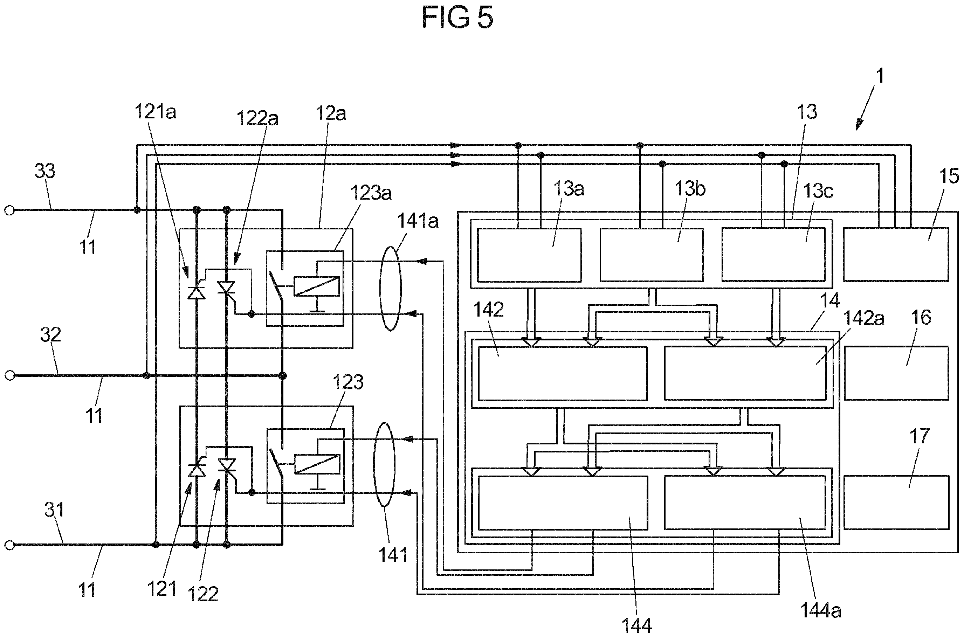

Die Grundgedanken der vorliegenden Erfindung beziehen sich nicht nur auf das Abbauen einer Potenzialdifferenz zwischen zwei Masseanschlüssen, sondern können gleichermaßen auf ein Erdungssystem bzw. auf Erdungssysteme mit mehr als zwei Masseanschlüssen angewendet werden. Beispielsweise sind bei dem Ausführungsbeispiel gemäß der Fig. 5 nicht nur die oben bereits beschriebenen Masseanschlüsse 31 und 32 ausgebildet, sondern es gibt einen weiteren Masseanschluss, den dritten Masseanschluss 33, der beispielsweise das Massepotenzial eines lokalen Energieversorgers führt, welcher elektrische Energie für das Bahnnetz bereitstellt. Neben dem Strompfad 11 kann dann ein weiterer Strompfad 11a vorgesehen sein, der den zweiten Masseanschluss 32 an den dritten Masseanschluss 33 koppelt. In diesem weiteren Strompfad 11a kann ein weiteres Schaltmodul 12a vorgesehen sein, das beispielsweise im Wesentlichen identisch zu dem Schaltmodul 12 aufgebaut sein kann. Beispielsweise enthält also auch das weitere Schaltmodul 12a ein erstes Leistungshalbleiterbauelement 121a, ein zweites Leistungshalbleiterbauelement 122a sowie ein Relais 123a. Um die Schaltmodule 12 und 12a zu betreiben kann die Messeinrichtung 13 drei Messmodule 13a-c umfassen. Zum Beispiel misst das erste Messmodul 13a eine erste Messgröße, die indikativ für den Strom im Strompfad und/oder für die Potentialdifferenz zwischen den Masseanschlüssen 32 und 33 ist. Zum Beispiel misst das zweite Messmodul 13b eine zweite Messgröße, die indikativ für den Strom im Strompfad und/oder für die Potentialdifferenz zwischen den Masseanschlüssen 31 und 33 ist. Zum Beispiel misst das dritte Messmodul 13c eine dritte Messgröße, die indikativ für den Strom im Strompfad und/oder für die Potentialdifferenz zwischen den Masseanschlüssen 31 und 32 ist.

Die Messmodule 13a-c können entsprechende Messergebnisse bereitstellen und der Steuereinrichtung 14 zu führen. Neben der Signalverarbeitungseinheit 142 kann eine weitere Signalverarbeitungseinheit 142a vorgesehen sein, wobei beide Signalverarbeitungseinheiten 142 und 142a im Wesentlichen digital implementiert sein können, beispielsweise in Gestalt eines Mikroprozessors. Beispielsweise führt das Messmodul 13a sein Messergebnis nur der Signalverarbeitungseinheit 142 zu, und das Messmodul 13c sein Messergebnis nur der weiteren Signalverarbeitungseinheit 142a. Das Messmodul 13b für sein Messergebnis beispielsweise beiden Signalverarbeitungseinheiten 142 und 142a zu.

Dabei können für die beiden Schaltmodule 12 und 12a wenigstens zwei Treiber 144 und 144a vorgesehen sein. Nach einer Auswertung der Messergebnisse können die Signalverarbeitungseinheiten 142 und 142a entsprechende Zwischensignale produzieren und diese den Treiber 144 und 144a zuführen. Die Treiber 144 und 144a können diese Zwischensignale in Steuersignale 141 und 141a wandeln und damit die Schaltmodule 12 und 12a betreiben.

Auf diese Weise kann der Strom auch bei einem Erdungssystem bzw. bei Erdungssystemen mit mehr als zwei Masseanschlüssen geregelt werden, um Potenzialdifferenzen zwischen den mehr als zwei Masseanschlüssen abzubauen.

Die Vorrichtung 1 kann auch erweiterte Funktionalitäten aufweisen. Beispielsweise kann ein Test- und Anzeigemodul 15 vorgesehen sein, um Tests an der Vorrichtung durchzuführen und Testergebnisse anzuzeigen. Die Vorrichtung 1 kann weiter mit einen Empfänger 16 ausgestattet werden, der eine Fernbedienung der Vorrichtung 1 erlaubt, beispielsweise über ein drahtgebundenes oder ein drahtloses Netzwerk. Ferner kann eine Benutzerschnittstelle 17 vorgesehen sein, die das durchführen von manuellen Wartungsarbeiten an der Vorrichtung 1 zulässt. Darüber hinaus kann die Vorrichtung 1 eine Kommunikationsschnittstelle (nicht dargestellt) aufweisen, die für eine Verbindung zu einem zentralen Server zulässt, der beispielsweise eine Vielzahl von Vorrichtungen 1 administriert. Ferner kann ein Daten-Logger (nicht dargestellt) vorgesehen sein, der Vorgänge der Vorrichtung 1 protokolliert, beispielsweise kontinuierlich Messergebnisse 131 und/oder Schaltvorgänge des Schaltmoduls 12 bzw. der Schaltmodule aufzeichnet.

Die Vorrichtung 1 kann derart ausgebildet sein, dass sie die Erfordernisse einer oder mehrerer für Bahnnetze maßgebliche Normen erfüllt. Beispielsweise ist die Vorrichtung 1 ausgebildet, die relevanten Vorgaben wenigstens einer der Normen EN 50122, VDE 0115 umzusetzen und derart beispielsweise einen Personenschutz sicherzustellen. Nach der Diktion dieser Normen handelt es sich beispielsweise bei dem ersten Masseanschluss 31 um die sogenannte "Rail Earth", bei dem zweiten Masseanschluss 32 beispielsweise um entweder die sogenannte "Tunnel Earth" oder die sogenannte "Water Earth", und bei dem dritten Masseanschluss 33 kann es sich beispielsweise um entweder die sogenannte "Water Earth" oder die sogenannte "Tunnel Earth" handeln. Ferner können die Schaltzeiten des Schaltmoduls 12 kürzer als die in der Norm EN 50122 genannten Werte sein. Nach einer weiteren Ausführungsform kann die Vorrichtung 1 ausgestaltet sein, auch die Vorgaben wenigstens einer der folgenden Normen zu erfüllen: VDE 0100, VDE 0115; VDE 0101, VDE 0102, VDE 0105, VDE 0110, VDE 0111, VDE 0141, VDE 0150, VDE 0160, VDE 0228, VDE 0432, VDE 0660, VDE 0670 und DIN 40050, EN 50122 und EN 50123.

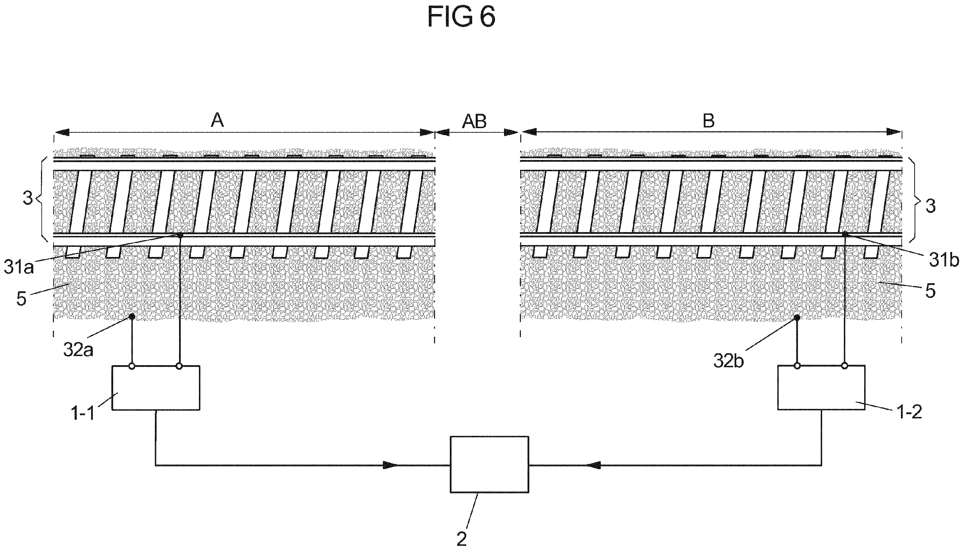

Einen weiteren Aspekt der vorliegenden Erfindung bildet das Orten eines elektrischen Kurzschlusses. Zur Erläuterung einer beispielhaften Ausführungsform dieses Verfahrens wird nachstehend auf die Fig. 6 verwiesen, die schematisch exemplarisch einen Bahnschienenabschnitt A, AB, B zeigt, an dem wenigstens zwei Vorrichtungen 1-1 und 1-2 zum Abbauen einer Potentialdifferenz angeordnet sind.

Beispielsweise sind die beiden Vorrichtungen 1-1 und 1-2 jeweils entsprechend einer der oben beschriebenen Ausführungsformen ausgebildet. Insoweit wird auf das Vorstehende verwiesen.

Eine erste Vorrichtung 1-1 ist beispielsweise in einem Bahngleisabschnitt A angeordnet, und davon beanstandet ist angeordnet eine zweite Vorrichtung 1-2 in einem Bahngleisabschnitt B. Zwischen diesen beiden Bahngleisabschnitt A und B kann sich ein weiterer Bahngleisabschnitt AB befinden, der beispielsweise ein oder mehrere Bahnhöfe umfasst. Der Bahngleisabschnitt A umfasst beispielsweise ein erstes Ende des Bahngleisabschnitt AB, und der Bahngleisabschnitt B umfasst beispielsweise ein zweites Ende des Bahngleisabschnitts AB. Die beiden Vorrichtungen 1-1 und 1-2 sind beispielsweise in einem Abstand von 1 km bis 5 km angeordnet.

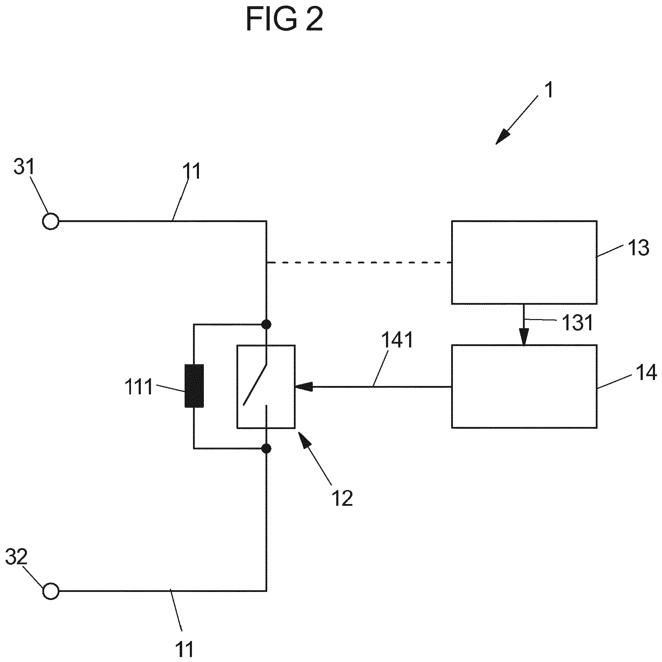

Beide Vorrichtungen 1-1 und 1-2 greifen nach einer Ausführungsform jeweils ein Potenzial derselben Schiene (Gleise) 3 ab. Die Vorrichtung 1-1 greift das Schienenpotenzial an einem ersten Masseanschluss 31a im Gleisabschnitt A ab, und die Vorrichtung 1-2 greift das Schienenpotenzial an einem ersten Masseanschluss 31b ab. Analoges gilt für den Abgriff des Potentials am Bauwerk 5, auf dem die Schiene 3 installiert ist: die Vorrichtung 1-1 greift das Bauwerkpotenzial an einem zweiten Masseanschluss 32a ab, und die Vorrichtung 1-2 greift das Bauwerkpotenzial an einem zweiten Masseanschluss 32b ab. In der Vorrichtung 1-1 sind die beiden Masseanschlüsse 31a und 32a durch einen Strompfad miteinander verbunden, wie es oben mit Bezug auf die Figuren 1 bis 5 beschrieben worden ist. In der Vorrichtung 1-2 sind die beiden Masseanschlüsse 31b und 32b durch einen Strompfad miteinander verbunden, wie es oben mit Bezug auf die Figuren 1 bis 5 beschrieben worden ist. Betreffend die nähere Ausgestaltung der Vorrichtung in 1-1 und 1-2 wird somit auf das Vorstehende verwiesen.

Beispielsweise sind beide Vorrichtungen 1-1 und 1-2 kommunikativ an eine Zentrale 2 gekoppelt. Die Zentrale 2 kann beispielsweise in einer Zentralstelle des Bahnnetzbetreibers, beispielsweise in einer sog. Betriebsfernsteuerzentrale, einer Betriebszentrale, einer Netzleitzentrale, einer Zentralstelle für den Werkstättendienst oder dergleichen implementiert sein. Die kommunikative Kopplung zwischen den Vorrichtungen 1-1 und 1-2 einerseits und der Zentrale 2 andererseits kann drahtlos und/oder drahtgebunden implementiert sein. Ferner kann die kommunikative Kopplung unidirektional, also von der jeweiligen Vorrichtung 1-1 und 1-2 hin zur Zentrale 2 ausgestaltet sein, oder aber bidirektional ausgebildet sein, beispielsweise derart, dass die Zentrale 2 auf den Betrieb der Vorrichtung 1-1 und 1-2 einwirken kann oder diesen fernsteuern kann. Für die Zwecke der Ausbildung der kommunikativen Kopplung können zum Beispiel in den Vorrichtungen 1-1 und 1-2 die oben genannten Einheiten 16 und/oder 17 vorgesehen werden und/oder eine andere Kommunikationsschnittstelle.

Beispielsweise werden die von den Messeinrichtungen (siehe Bezugsziffer 13 in den vorstehenden Zeichnungen) gemessenen Messgrößen, die, wie gesagt, indikativ für den Strom im jeweiligen Strompfad und/oder für die Potenzialdifferenz zwischen den jeweiligen Masseanschlüssen sein können, aufgezeichnet. Diese Aufzeichnung kann beispielsweise durch die Zentrale 2 erfolgen. Alternativ oder zusätzlich zu den Messgrößen können auch Betriebsgrößen der Vorrichtungen 1-1 und 1-2 aufgezeichnet werden, beispielsweise wiederum durch die Zentrale 2. Die Betriebsgrößen sind beispielsweise indikativ für den Betrieb der jeweiligen Schaltmodule (siehe Bezugsziffer 12 in den vorstehenden Zeichnungen) und zeigen beispielsweise an, wann und wie lange das Schaltmodul 12 zum Abbauen der Potenzialdifferenz eingeschaltet worden ist. Für diese Zwecke kann in den Vorrichtungen 1-1 und 1-2 besagter Daten-Logger vorgesehen sein. Beispielsweise kann die Zentrale 2 ausgebildet sein, auf Daten-Logger in den Vorrichtungen 1-1 und 1-2 zuzugreifen.

In einem nächsten Schritt können die aufgezeichneten Messgrößen und/oder die aufgezeichneten Betriebsgrößen einer Auswertung unterzogen werden. Beispielsweise wird dabei ermittelt, wie sich im Falle des Betriebs der beiden Vorrichtungen 1-1 und 1-2 der Gesamtstrom zum Abbauen der Potenzialdifferenz zwischen der Schiene 3 einerseits und dem Bauwerk 5 andererseits aufteilt.

Einen Grund für das Auftreten eines derart hohen Stroms, der den gleichzeitigen Betrieb der beiden Vorrichtungen 1-1 und 1-2 auslösen kann - beispielsweise, weil sowohl die Potenzialdifferenz zwischen den beiden Masseanschlüssen 31a und 32a als auch die Potenzialdifferenz zwischen den beiden Masseanschlüssen 31b und 32b einen jeweils vorgegebenen Schwellenwert überschreitet - kann ein im Bahnnetz aufgetretener elektrischer Kurzschluss bilden, der zu sehr hohen Strömen in der Schiene 3 führen kann. Beispielsweise entsteht der elektrische Kurzschluss zwischen der Schiene 3 und dem Bauwerk 5. Es kann aber auch ein anders gearteter elektrischer Kurzschluss sein, der zu einem hohen Strom in der Schiene 3 führt. Beispielsweise entsteht der Kurzschluss im Gleisabschnitt AB zwischen den Enden A und B, an denen die Vorrichtungen 1,1 und 1-2 installiert sein können.

In Abhängigkeit von der Auswertung der aufgezeichneten Messgrößen und/oder Betriebsgrößen kann ein Auswertungsergebnis bereitgestellt werden, das indikativ für den Ort des elektrischen Kurzschlusses ist. Beispielsweise kann basierend auf der Amplitude des Stroms im Strompfad der Vorrichtung 1-1 und der Amplitude des Stroms im Strompfad der Vorrichtung 1-2 auf den Ort des Kurzschlusses geschlossen werden.

Nach einer Ausführungsform erfolgt die Ortung des Kurzschlusses mit einer Genauigkeit von besser als +/- 10 Meter. Somit kann ein Wartungsteam zur Behebung des den Kurzschluss verursachenden Schadens oder der den Kurzschluss verursachenden Störung gezielt ausgesendet werden.

Das Auswertungsergebnis kann beispielsweise den Abstand des Kurzschlusses zu wenigstens einer der beiden Vorrichtungen 1-1 und 1-2 angeben.

Das oben beschriebene Verfahren zur Ortung eines elektrischen Kurzschlusses beinhaltet die Erkenntnis, dass in einem Bahnsystem zwischen dem Rückleiter, also der Schiene 3, und dem umgebenden Bauwerk 5 Kurzschlüsse plötzlich und unvorhersehbar auftreten. Ferner sind diese mitunter auch nur dann problematisch, wenn eine Bahn 4 fährt, d.h. wenn ein Rückstrom durch die Schiene (den Rückleiter) 3 fließt, beispielsweise weil nur dann ein Strom von einem Erdungssystem in das andere fließen kann. Dadurch kann es sehr schwierig sein, den Kurzschluss in der Schiene 3 zu finden. Aufgrund der erfindungsgemäßen Auswertung der Messgrößen und/oder Betriebsgrößen der Vorrichtungen 1-1 und 1-2 kann das Auffinden eines Kurzschlusses in der Schiene 3 nach einer oder mehreren Ausführungsformen vereinfacht werden.

Das hier genannte Bahnnetz kann ein Gleichstromnetz oder ein Wechselstrom Netz sein. Über die Schiene 3, die den ersten Masseanschluss 31 ausbildet und als Rückleiter fungieren kann, kann somit beispielsweise ein Gleichstrom oder ein Wechselstrom fließen.

Räumlich lokale Begriffe, wie beispielsweise "unter", "unterhalb", "niedrig-", "über", "ober-", "vorgelagert", "nachgelagert" und ähnliches, werden zur Beschreibungsvereinfachung verwendet, um die Positionierung der Stelle eines Elements gegenüber einem zweiten Element zu erklären. Diese Begriffe beabsichtigen das Einschließen unterschiedlicher Ausrichtungen der jeweiligen Vorrichtung in Ergänzung zu anderen, als in den Figuren abgebildeten Ausrichtungen. Ferner werden Begriffe, wie beispielsweise "erst-", "zweit-" und ähnliches, auch zur Beschreibung verschiedener Elemente, Regionen, Teilbereiche etc. verwendet und sind ebenso als nicht einschränkend zu verstehen. Ähnliche Begriffe beziehen sich auf ähnliche Elemente die ganze Beschreibung hindurch.

Wie hierin verwendet, sind die Begriffe "habend", "enthaltend", "einschließend", "umfassend", "aufweisend" und ähnliches offene Begriffe, welche das Vorhandensein von angeführten Elementen oder Merkmalen anzeigen, zusätzliche Elemente oder Merkmale jedoch nicht ausschließen. Die Artikel "ein/eine" und "der/die/das" sind dahingehend zu verstehen, dass sie den Plural als auch den Singular umfassen, sofern der Kontext nicht eindeutig etwas anderes anzeigt.

In Anbetracht des obigen Bereichs von Variationen und Anwendungen wird darauf hingewiesen, dass die vorliegende Erfindung nicht durch die vorangegangene Beschreibung eingeschränkt wird, und auch nicht durch die begleitenden Zeichnungen eingeschränkt wird. Die vorliegende Erfindung ist vielmehr lediglich durch die folgenden Ansprüche definiert.

## Patentansprüche

1. Vorrichtung (1) zum Abbauen einer Potentialdifferenz zwischen einem ersten Masseanschluss (31) und einem zweiten Masseanschluss (32), wobei der erste Masseanschluss (31) ausgebildet wird von einer Schiene (3) für ein Schienenfahrzeug (4), und wobei der zweite Masseanschluss (32) ausgebildet wird von einem Bauwerk (5), an dem die Schiene (3) installiert ist, die Vorrichtung (1) umfassend:
- einen Strompfad (11) zum Führen eines Stroms zwischen dem ersten Masseanschluss (31) und dem zweiten Masseanschluss (32);
- ein im Strompfad (11) installiertes steuerbares Schaltmodul (12);
- eine Messeinrichtung (13), die ausgebildet ist zum Messen wenigstens einer Messgröße, die indikativ für den Strom im Strompfad (11) und/oder für die Potentialdifferenz zwischen den Masseanschlüssen (31, 32) ist, und zum Bereitstellen eines Messergebnisses (131);
- eine Steuereinrichtung (14), die ausgebildet ist, in Abhängigkeit von dem Messergebnis (131) ein Steuersignal (141) zu erzeugen und dem Schaltmodul (12) zuzuführen,**dadurch gekennzeichnet, dass** die Steuereinrichtung (14) weiter ausgebildet ist, durch den Betrieb des Schaltmoduls (12) den Strom im Strompfad (11) amplitudenmäßig zu begrenzen.

2. Vorrichtung (1) nach Anspruch 1, wobei das Schaltmodul (12) wenigstens ein schaltbares Leistungshalbleiterbauelement (121) umfasst.

3. Vorrichtung (1) nach Anspruch 1 oder 2, wobei das Schaltmodul (12) wenigstens zwei antiparallel zueinander verschaltete Leistungshalbleiterbauelemente (121, 122) umfasst, wobei die Steuereinrichtung (14) weiter ausgebildet ist, durch den Betrieb der wenigstens zwei antiparallel zueinander verschalteten Leistungshalbleiterbauelemente (121, 122) den Strom im Strompfad (11) in beiden Stromflussrichtungen amplitudenmäßig zu begrenzen.

4. Vorrichtung (1) nach einem der vorstehenden Ansprüche, wobei das Schaltmodul (12) ein Relais (123) umfasst, und wobei die Steuereinrichtung (14) weiter ausgebildet ist, dem Relais (123) das Steuersignal (141) zuzuführen.

5. Vorrichtung (1) nach einem der vorstehenden Ansprüche, wobei der Strompfad (11) ein passives Strombegrenzungsmittel (111) umfasst, das parallel zum Schaltmodul (12) geschaltet ist.

6. Vorrichtung (1) nach einem der vorstehenden Ansprüche, wobei die Messeinrichtung (13) ausgebildet ist, den Strom im Strompfad (11) während des Abbauens der Potentialdifferenz zwischen den Masseanschlüssen (31, 32) als Messgröße zu messen.

7. Vorrichtung (1) nach einem der vorstehenden Ansprüche, wobei die Steuereinrichtung (14) eine Signalverarbeitungseinheit (142) umfasst, die ausgebildet ist, das Messergebnis (131) auszuwerten und in Abhängigkeit von der Auswertung ein Zwischensignal (143) bereitzustellen.

8. Vorrichtung (1) nach Anspruch 7, wobei die Steuereinrichtung (14) einen Treiber (144) umfasst, der ausgebildet ist, das Zwischensignal (143) in das Steuersignal (141) zu transformieren und dem Schaltmodul (12) zuzuführen.

9. Vorrichtung (1) nach Anspruch 7 oder 8, wobei die Signalverarbeitungseinheit (142) digitale Signalverarbeitungsmittel, beispielsweise einen Mikroprozessor, umfasst.

10. Vorrichtung (1) nach einem der vorstehenden Ansprüche, wobei die Steuereinrichtung (14) ausgebildet ist, in Abhängigkeit von dem Messergebnis (131) den Strom im Strompfad (11) zu regeln.

11. Vorrichtung (1) nach einem der vorstehenden Ansprüche, wobei das Schaltmodul (12), die Messeinrichtung (13) und die Steuereinrichtung (14) in ihrer Gemeinsamkeit einen Stromregler ausbilden.

12. Vorrichtung (1) nach einem der vorstehenden Ansprüche, wobei die Steuereinrichtung (14) ausgebildet ist, einen oder mehrere Schwellenwerte, die indikativ für eine maximal zulässige Potentialdifferenz zwischen den beiden Masseanschlüssen (31, 32) und/oder indikativ für einen maximal zulässigen Strom im Strompfad (11) sind, zu speichern, und wobei die Steuereinrichtung (14) ausgebildet ist, den Strom im Strompfad (11) in Abhängigkeit von dem Messergebnis (131) und basierend auf den einen oder mehreren Schwellenwerten zu regeln.

13. Vorrichtung (1) nach einem der vorstehenden Ansprüche, wobei die Steuereinrichtung (14) ausgebildet ist, den Strom im Strompfad auf eine maximale Amplitude von 40 A zu begrenzen.

14. Vorrichtung (1) nach einem der vorstehenden Ansprüche, wobei der Strompfad (11) bei eingeschaltetem Schaltmodule (12) eine Impedanz von Z < 0,1Ω aufweist.

15. Verfahren zum Betreiben einer Vorrichtung (1) zum Abbauen einer Potentialdifferenz zwischen einem ersten Masseanschluss (31) und einem zweiten Masseanschluss (32), wobei der erste Masseanschluss (31) ausgebildet wird von einer Schiene (3) für ein Schienenfahrzeug (4), und wobei der zweite Masseanschluss (32) ausgebildet wird von einem Bauwerk (5), an dem die Schiene (3) installiert ist, die Vorrichtung (1) umfassend einen Strompfad (11) zum Führen eines Stroms zwischen dem ersten Masseanschluss (31) und dem zweiten Masseanschluss (32) sowie ein im Strompfad (11) installiertes steuerbares Schaltmodul (12), wobei das Verfahren umfasst:
- Messen wenigstens einer Messgröße, die indikativ für den Strom im Strompfad (11) und/oder für die Potentialdifferenz zwischen den Masseanschlüssen (31, 32) ist, und Bereitstellen eines Messergebnisses (131);
- Erzeugen eines Steuersignals (141) in Abhängigkeit von dem Messergebnis (131) und Zuführen des Steuersignals (141) zum Schaltmodul (12); **gekennzeichnet durch**
- amplitudenmäßiges Begrenzen des Stroms im Strompfad (11) durch den Betrieb des Schaltmoduls (12).

16. Verfahren zum Orten eines elektrischen Kurzschlusses in einem Bahnschienenabschnitt (A, B, AB), an welchem wenigstens zwei Vorrichtungen (1-1, 1-2), die jeweils nach einem der vorstehenden Ansprüche 1 bis 14 ausgebildet sind, angeordnet sind, das Verfahren umfassend:
- Aufzeichnen der von den Messeinrichtungen (13) der Vorrichtungen (1-1, 1-2) gemessenen Messgrößen und/oder von Betriebsgrößen, die indikativ für den Betrieb der Schaltmodule (12) der Vorrichtungen (1-1, 1-2) sind;
- Auswerten der aufgezeichneten Messgrößen und/oder Betriebsgrößen;
- Bereitstellen eines Auswertungsergebnisses, das indikativ für den Ort des elektrischen Kurzschlusses ist.

17. Verfahren nach Anspruch 16, wobei die Aufzeichnung und die Auswertung der Messgrößen und/oder Betriebsgrößen sowie die Bereitstellung des Auswertungsergebnisses durch eine von den Vorrichtungen (1-1, 1-2) beabstandet angeordneten und kommunikativ an diese gekoppelte Zentrale (2) erfolgt.

18. Verfahren nach Anspruch 16 oder 17, wobei das Auswertungsergebnis den Abstand des elektrischen Kurzschlusses zu wenigstens einer der Vorrichtungen (1-1, 1-2) angibt.

19. Verfahren nach einem der vorstehenden Ansprüche 16 bis 18, wobei der elektrische Kurzschluss an einer Stelle der Schiene (3) zwischen den wenigstens zwei Vorrichtungen (1-1, 1-2) erfolgt.

20. Verfahren nach einem der vorstehenden Ansprüche 16 bis 19, wobei die Auswertung einen Vergleich der von den Messeinrichtungen (13) der Vorrichtungen (1-1, 1-2) gemessenen Messgrößen umfasst, und wobei die Messgrößen indikativ für eine Amplitude des im jeweiligen Strompfad fließenden Stroms sind.

## Claims

1. Apparatus (1) for reducing a potential difference between a first earth connection (31) and a second earth connection (32), wherein the first earth connection (31) is formed by a rail (3) for a rail vehicle (4), and wherein the second earth connection (32) is formed by a structure (5) on which the rail (3) is installed, the apparatus (1) comprising:
- a current path (11) for carrying a current between the first earth connection (31) and the second earth connection (32);
- a controllable switching module (12) installed in the current path (11);
- a measuring device (13) designed to measure at least one measured variable indicative of the current in the current path (11) and/or of the potential difference between the earth connections (31, 32) and to provide a measurement result (131);
- a control device (14) designed to take the measurement result (131) as a basis for generating a control signal (141) and to supply said control signal to the switching module (12), **characterized in that** the control device (14) is furthermore designed to limit the amplitude of the current in the current path (11) by means of the operation of the switching module (12).

2. Apparatus (1) according to Claim 1, wherein the switching module (12) comprises at least one switchable power semiconductor component (121).

3. Apparatus (1) according to Claim 1 or 2, wherein the switching module (12) comprises at least two power semiconductor components (121, 122) connected up in antiparallel with one another, wherein the control device (14) is furthermore designed to limit the amplitude of the current in the current path (11) in both directions of current flow by means of the operation of the at least two power semiconductor components (121, 122) connected up in antiparallel with one another.

4. Apparatus (1) according to one of the preceding claims, wherein the switching module (12) comprises a relay (123), and wherein the control device (14) is furthermore designed to supply the control signal (141) to the relay (123).

5. Apparatus (1) according to one of the preceding claims, wherein the current path (11) comprises a passive current limiting means (111) connected in parallel with the switching module (12).

6. Apparatus (1) according to one of the preceding claims, wherein the measuring device (13) is designed to measure the current in the current path (11) as a measured variable while the potential difference between the earth connections (31, 32) is reduced.

7. Apparatus (1) according to one of the preceding claims, wherein the control device (14) comprises a signal processing unit (142) designed to evaluate the measurement result (131) and to take the evaluation as a basis for providing an intermediate signal (143).

8. Apparatus (1) according to Claim 7, wherein the control device (14) comprises a driver (144) designed to transform the intermediate signal (143) into the control signal (141) and to supply said control signal to the switching module (12).

9. Apparatus (1) according to Claim 7 or 8, wherein the signal processing unit (142) comprises digital signal processing means, for example a microprocessor.

10. Apparatus (1) according to one of the preceding claims, wherein the control device (14) is designed to take the measurement result (131) as a basis for controlling the current in the current path (11).

11. Apparatus (1) according to one of the preceding claims, wherein the switching module (12), the measuring device (13) and the control device (14) together form a current controller.

12. Apparatus (1) according to one of the preceding claims, wherein the control device (14) is designed to store one or more threshold values indicative of a maximum permissible potential difference between the two earth connections (31, 32) and/or indicative of a maximum permissible current in the current path (11), and wherein the control device (14) is designed to control the current in the current path (11) on the basis of the measurement result (131) and on the basis of the one or more threshold values.

13. Apparatus (1) according to one of the preceding claims, wherein the control device (14) is designed to limit the current in the current path to a maximum amplitude of 40 A.

14. Apparatus (1) according to one of the preceding claims, wherein the current path (11) has an impedance of Z < 0.1 Ω when the switching modules (12) are switched on.

15. Method for operating an apparatus (1) for reducing a potential difference between a first earth connection (31) and a second earth connection (32), wherein the first earth connection (31) is formed by a rail (3) for a rail vehicle (4), and wherein the second earth connection (32) is formed by a structure (5) on which the rail (3) is installed, the apparatus (1) comprising a current path (11) for carrying a current between the first earth connection (31) and the second earth connection (32) and also a controllable switching module (12) installed in the current path (11), wherein the method comprises:
- measuring at least one measured variable indicative of the current in the current path (11) and/or of the potential difference between the earth connections (31, 32), and providing a measurement result (131);
- generating a control signal (141) on the basis of the measurement result (131) and supplying the control signal (141) to the switching module (12); **characterized by**
- limiting the amplitude of the current in the current path (11) by means of the operation of the switching module (12).

16. Method for locating an electrical short in a railway track section (A, B, AB) on which at least two apparatuses (1-1, 1-2), which are each designed according to one of preceding Claims 1 to 14, are arranged, the method comprising:
- recording the measured variables measured by the measuring devices (13) of the apparatuses (1-1, 1-2) and/or operating variables indicative of the operation of the switching modules (12) of the apparatuses (1-1, 1-2) ;
- evaluating the recorded measured variables and/or operating variables;
- providing an evaluation result indicative of the location of the electrical short.

17. Method according to Claim 16, wherein the recording and evaluation of the measured variables and/or operating variables and the provision of the evaluation result are carried out by a control centre (2) that is arranged at a distance from the apparatuses (1-1, 1-2) and communicatively coupled thereto.

18. Method according to Claim 16 or 17, wherein the evaluation result indicates the distance of the electrical short from at least one of the apparatuses (1-1, 1-2).

19. Method according to one of preceding Claims 16 to 18, wherein the electrical short takes place at a point on the rail (3) between the at least two apparatuses (1-1, 1-2).

20. Method according to one of preceding Claims 16 to 19, wherein the evaluation comprises a comparison of the measured variables measured by the measuring devices (13) of the apparatuses (1-1, 1-2), and wherein the measured variables are indicative of an amplitude of the current flowing in the respective current path.

## Revendications

1. Dispositif (1) de réduction d'une différence de potentiel entre une première connexion à la masse (31) et une seconde connexion à la masse (32), dans lequel la première connexion à la masse (31) est formée par un rail (3) destiné à un véhicule ferroviaire (4), et dans lequel la seconde connexion à la masse (32) est formée par une structure (5) sur laquelle est installé le rail (3), le dispositif (1) comprenant :
- un trajet de courant (11) destiné à acheminer un courant entre la première connexion à la masse (31) et la deuxième connexion à la masse (32) ;
- un module de commutation commandable (12) installé dans le trajet de courant (11) ;
- un appareil de mesure (13) qui est conçu pour mesurer au moins une grandeur de mesure qui est indicatrice du courant passant dans le trajet du courant (11) et/ou de la différence de potentiel entre les connexions à la masse (31, 32), et pour fournir un résultat de mesure (131) ;
- un appareil de commande (14) qui est conçu pour générer un signal de commande (141) en fonction du résultat de mesure (131) et pour le fournir au module de commutation (12), **caractérisé en ce que** l'appareil de commande (14) est en outre conçu pour limiter en amplitude le courant passant dans le trajet de courant (11) par mise en fonctionnement du module de commutation (12).

2. Dispositif (1) selon la revendication 1, dans lequel le module de commutation (12) comprend au moins un composant semi-conducteur de puissance commutable (121).

3. Dispositif (1) selon la revendication 1 ou 2, dans lequel le module de commutation (12) comprend au moins deux composants semi-conducteurs de puissance (121, 122) connectés l'un à l'autre en antiparallèle, dans lequel l'appareil de commande (14) est en outre conçu pour limiter en amplitude le courant passant dans le trajet de courant (11) dans les deux sens de circulation du courant par mise en fonctionnement desdits au moins deux composants semi-conducteurs de puissance (121, 122) connectés l'un à l'autre en antiparallèle.

4. Dispositif (1) selon l'une des revendications précédentes, dans lequel le module de commutation (12) comprend un relais (123), et dans lequel l'appareil de commande (14) est en outre conçu pour envoyer le signal de commande (141) au relais (123).

5. Dispositif (1) selon l'une des revendications précédentes, dans lequel le trajet de courant (11) comprend un dispositif de limitation de courant passif (111) qui est monté en parallèle avec le module de commutation (12).

6. Dispositif (1) selon l'une des revendications précédentes, dans lequel l'appareil de mesure (13) est conçu pour mesurer le courant passant dans le trajet de courant (11) en tant que grandeur de mesure pendant la réduction de la différence de potentiel entre les connexions à la masse (31, 32).

7. Dispositif (1) selon l'une des revendications précédentes, dans lequel l'appareil de commande (14) comprend une unité de traitement de signaux (142) qui est conçue pour évaluer le résultat de mesure (131) et pour fournir un signal intermédiaire (143) en fonction de l'évaluation.

8. Dispositif (1) selon la revendication 7, dans lequel l'appareil de commande (14) comprend un circuit d'attaque (144) qui est conçu pour transformer le signal intermédiaire (143) en le signal de commande (141) et pour l'envoyer au module de commutation (12).

9. Dispositif (1) selon la revendication 7 ou 8, dans lequel l'unité de traitement de signaux (142) comprend des moyens de traitement de signaux numériques, par exemple un microprocesseur.

10. Dispositif (1) selon l'une des revendications précédentes, dans lequel l'appareil de commande (14) est conçu pour réguler le courant passant dans le trajet de courant (11) en fonction du résultat de mesure (131).

11. Dispositif (1) selon l'une des revendications précédentes, dans lequel le module de commutation (12), l'appareil de mesure (13) et l'appareil de commande (14) forment ensemble un régulateur de courant.

12. Dispositif (1) selon l'une des revendications précédentes, dans lequel l'appareil de commande (14) est conçu pour stocker une ou plusieurs valeurs de seuil qui sont indicatrices d'une différence de potentiel maximale admissible entre les deux connexions à la masse (31, 32) et/ou indicatrices d'un courant maximal admissible dans le trajet de courant (11), et dans lequel l'appareil de commande (14) est conçu pour réguler le courant passant dans le trajet de courant (11) en fonction du résultat de mesure (131) et sur la base d'une ou de plusieurs valeurs de seuil.

13. Dispositif (1) selon l'une des revendications précédentes, dans lequel l'appareil de commande (14) est conçu pour limiter le courant passant dans le trajet de courant à une amplitude maximale de 40 A.

14. Dispositif (1) selon l'une des revendications précédentes, dans lequel le trajet de courant (11) présente une impédance de Z < 0,1Ω lorsque le module de commutation (12) est activé.

15. Procédé de fonctionnement d'un dispositif (1) de réduction d'une différence de potentiel entre une première connexion à la masse (31) et une seconde connexion à la masse (32), dans lequel la première connexion à la masse (31) est formée par un rail (3) destiné à un véhicule ferroviaire (4), et dans lequel la seconde connexion à la masse (32) est formée par une structure (5) sur laquelle est installé le rail (3), le dispositif (1) comprenant un trajet de courant (11) destiné à acheminer un courant entre la première connexion à la masse (31) et la seconde connexion à la masse (32), et un module de commutation commandable (12) installé dans le trajet de courant (11), dans lequel le procédé comprend :
- la mesure d'au moins une grandeur de mesure qui est indicatrice du courant passant dans le trajet de courant (11) et/ou de la différence de potentiel entre les connexions à la masse (31, 32), et la fourniture d'un résultat de mesure (131) ;
- la génération d'un signal de commande (141) en fonction du résultat de mesure (131) et la fourniture du signal de commande (141) au module de commutation (12) ; **caractérisé par**
- la limitation en amplitude du courant passant dans le trajet de courant (11) par mise en fonctionnement du module de commutation (12).

16. Procédé de détection d'un court-circuit électrique dans une section de rail de chemin de fer (A, B, AB) sur laquelle sont disposés au moins deux dispositifs (1-1, 1-2) respectivement réalisés selon l'une des revendications 1 à 14 précédentes, le procédé comprenant :
- l'enregistrement des grandeurs de mesure mesurées par les appareils de mesure (13) des dispositifs (1-1, 1-2) et/ou de grandeurs de fonctionnement indicatrices du fonctionnement des modules de commutation (12) des dispositifs (1-1, 1-2) ;
- l'évaluation des grandeurs de mesure enregistrées et/ou des grandeurs de fonctionnement ;
- la fourniture d'un résultat d'évaluation qui est indicateur de l'emplacement du court-circuit électrique.

17. Procédé selon la revendication 16, dans lequel l'enregistrement et l'évaluation des grandeurs de mesure et/ou des grandeurs de fonctionnement ainsi que la fourniture du résultat d'évaluation sont effectués par une centrale (2) disposée à distance des dispositifs (1-1, 1-2) et couplée à ceux-ci par voie de communication.

18. Procédé selon la revendication 16 ou 17, dans lequel le résultat d'évaluation indique la distance du court-circuit électrique par rapport à au moins l'un des dispositifs (1-1, 1-2).

19. Procédé selon l'une des revendications 16 à 18 précédentes, dans lequel le court-circuit électrique se produit en un point du rail (3) se trouvant entre lesdits au moins deux dispositifs (1-1, 1-2).

20. Procédé selon l'une des revendications 16 à 19 précédentes, dans lequel l'évaluation comprend une comparaison des grandeurs de mesure mesurées par les appareils de mesure (13) des dispositifs (1-1, 1-2), et dans lequel les grandeurs de mesure sont indicatrices d'une amplitude du courant circulant dans le trajet de courant respectif.
